# EUROPÄISCHE PATENTSCHRIFT

(11) **EP 4 258 637 B1**
(45) Veröffentlichungstag und Bekanntmachung des Hinweises auf die Patenterteilung: **25.02.2026**
(21) Anmeldenummer: 22167468.2
(22) Anmeldetag: 08.04.2022
(51) Int. Cl.: H04N 1/60

(54) **VERFAHREN ZUM BEDRUCKEN EINER PAPIERBAHN**
METHOD FOR PRINTING A SHEET OF PAPER
PROCÉDÉ D'IMPRESSION D'UNE BANDE EN PAPIER

(43) Veröffentlichungstag der Anmeldung: 11.10.2023
(73) Patentinhaber: SWISS KRONO Tec AG, 6004 Luzern (CH)
(72) Erfinder: GEITZ, Falko, 16845 Zernitz-Lohm (DE)
(74) Vertreter: Gramm, Lins & Partner Patent- und Rechtsanwälte PartGmbB

(56) Entgegenhaltungen:
- EP-A1- 3 961 166
- WO-A1-2019/234147
- US-A1- 2005 259 276

## Beschreibung

Die Erfindung betrifft ein Verfahren zum Bedrucken einer Papierbahn mit einem Druckmotiv mittels einer Digitaldruckanlage.

Papierbahnen werden für unterschiedlichste Zwecke mit einem Druckmotiv bedruckt. Sie werden beispielsweise verwendet, um Paneele oder Platten herzustellen, die beispielsweise als Fußbodenbeläge, Wandverkleidungen, Deckenverkleidungen oder Möbelplatten verwendet werden können. Insbesondere bei der Herstellung von Fußbodenpaneelen ist es erwünscht und von großem Vorteil, wenn die mit dem Druckmotiv bedruckten Papierbahnen keine farblichen Unterschiede zueinander aufweisen. Dies ist insbesondere dann der Fall, wenn zu unterschiedlichen Zeitpunkten Paneele mit dem gleichen Dekor hergestellt werden und so zu diesen unterschiedlichen Zeitpunkten verschiedene Papierbahnen mit dem gleichen Dekor bedruckt werden. Um hier eine Reproduzierbarkeit und Farbtreue zu erreichen, ist es aus dem Stand der Technik bekannt, eine digitale Druckvorlage zu hinterlegen.

In dieser digitalen Druckvorlage sind digitale Informationen über das Druckmotiv enthalten. Anhand dieser digitalen Druckvorlage ist es möglich, die Digitaldruckanlage zu steuern und somit zu verwenden, um die Papierbahn mit einem Druckmotiv zu bedrucken. Aus dem Stand der Technik sind verschiedene Verfahren bekannt, bei denen die digitale Druckvorlage verwendet wird, um ein Druckmotiv auf die Papierbahn zu drucken. Dieses so erstellte Exemplar wird dann mit dem Soll-Motiv verglichen. Auf der Basis dieses Vergleiches kann entschieden werden, ob die in der digitalen Druckvorlage enthaltenen Steuerbefehle und Parameter, beispielsweise Farbwerte, die beim Druck verwendet werden, eine ausreichende Qualität des Druckerzeugnisses, also der mit dem Druckmotiv bedruckten Papierbahn, ermöglichen.

Aus der WO 2019/234147 A1 ist beispielsweise ein Verfahren bekannt, bei dem ein digitales Soll-Bild aus hyperspektralen digitalen Bildern erzeugt wird. Hyperspektrale Bilder sind Bilder, die Informationen nicht nur über sichtbare Farben, also Frequenzen im sichtbaren Lichtbereich, enthalten, sondern auch Informationen über einen darüber hinausgehenden Frequenzbereich. Diese so hergestellten Soll-Bilder werden dann mit Ist-Bildern, die vom bedruckten Exemplar der Papierbahn erzeugt werden, verglichen.

Die US 2005/0259276 A1 beschreibt ein Verfahren zum Kalibrieren eines Druckers. Dabei wird das Druckergebnis eines Probedruckes mit einem Soll-Ergebnis verglichen, um festzustellen, wie originalgetreu der zu kalibrierende Drucker die Vorgaben umsetzt. Bei Abweichungen wird der Drucker so kalibriert, dass er auf die unveränderten digitalen Informationen, mit denen er besteuert wird, anders, nämlich dem Original besser entsprechend, reagiert.

Aus der EP 3 961 166 A1 ist ein Verfahren bekannt, bei dem hyperspektrale Messdaten eines Druckergebnisses mit vorgegebenen Referenz-Messdaten verglichen werden, um die Qualität des Druckergebnisses zu bestimmen.

Nachteilig ist, dass dieses "Nachmustern", also das Kontrollieren und Justieren und Einstellen der verschiedenen Produktionsparameter der Digitaldruckanlage, aufwendig ist. Es ist notwendig, da äußere Einflüsse, beispielsweise Veränderungen von Temperatur und Luftfeuchtigkeit, der verwendeten Tinte, einer möglicherweise verwendeten Grundierung und/oder der verwendeten Papierbahn, die Qualität des gedruckten Druckmotivs beeinträchtigen können. Eine Korrektur, zumindest jedoch eine Überprüfung der Druckqualität ist daher notwendig. Die aus dem Stand der Technik bekannten Verfahren sind jedoch zeitaufwendig und/oder Material intensiv und damit teuer. Zudem können zwar Abweichungen des gedruckten Exemplars des Druckmotivs auf der Papierbahn von einem Grundmuster oder einer digitalen Druckvorlage bestimmt werden, die notwendige Korrektur ist jedoch in der Regel nicht präzise zu erkennen und somit nicht zielführend umsetzbar. Vielmehr erfordert das "Nachmustern" oftmals mehrere Iterationsschritte und gegebenenfalls Erfahrungen und Sachverstand eines die Digitaldruckanlage bedienenden Mitarbeiters, um möglichst schnell zum gewünschten Ergebnis zu kommen.

Der Erfindung liegt daher die Aufgabe zugrunde, ein Verfahren vorzuschlagen, mit dem diese Nachteile behoben oder zumindest abgemildert werden.

Die Erfindung löst die gestellte Aufgabe durch ein Verfahren zum Bedrucken einer Papierbahn mit einem Druckmotiv mittels einer Digitaldruckanlage, wobei das Verfahren folgende Schritte aufweist:
- Bereitstellen einer digitalen Druckvorlage, in der digitale Informationen über das Druckmotiv enthalten sind und die Soll-Tonwerte einer Farbe des Druckmotivs enhalten, und eines Soll-Tonwertes eines Urmusters des Druckmotivs,
- Herstellen eines Druckexemplars durch Bedrucken einer Oberfläche der Papierbahn mittels der Digitaldruckanlage auf der Grundlage der Druckvorlage,
- Bestimmen wenigstens eines Ist-Tonwertes der Farbe an wenigstens einer Stelle der bedruckten Oberfläche,
- Vergleichen des bestimmten Ist-Tonwertes mit dem Soll-Tonwertes und
- Korrigieren des Soll-Tonwertes in den digitalen Informationen der Druckvorlage auf der Grundlage des Ergebnisses des Vergleiches,
- Herstellen eines weiteren Druckexemplars durch Bedrucken einer Oberfläche der Papierbahn mittels der Digitaldruckanlage auf der Grundlage der korrigierten Informationen der Druckvorlage (4,4-6).

Der Tonwert einer Farbe gibt die unterschiedlichen Abstufungen der Farbe zwischen Hell und Dunkel in Prozent an. Bei einem Tonwert von 0 % liegt keine Farbe vor. Die entsprechende Stelle, die diesen Tonwert aufweist, ist somit unbedruckt und hell. Derartige Fachbereiche werden auch Lichter genannt. Sie werden hell oder Lichter genannt, unabhängig davon, welche Farbe die Oberfläche aufweist, auf die der Druck aufgebracht wird. Demgegenüber steht ein Tonwert von 100 % für die maximale Farbe, die auch als Vollton bezeichnet wird, der entsprechend als dunkel angesehen wird. Dunkle Fachbereiche werden auch Tiefen genannt. In den digitalen Informationen über das Druckmotiv, die in der digitalen Druckvorlage enthalten sind, sind auch die Soll-Tonwerte einer Farbe des Druckmotivs enthalten. Vorzugsweise enthalten die digitalen Informationen sämtliche Soll-Tonwerte aller beim Drucken des Druckmotivs verwendeten Farben. Für jede verwendete Farbe ist bevorzugt für jede bedruckte Stelle der Papierbahn, beispielsweise jeden Pixel des Druckmotivs, ein Soll-Tonwert der entsprechenden Farbe oder der entsprechenden Farben hinterlegt.

Bei dem erfindungsgemäßen Verfahren wird die digitale Druckvorlage verwendet, um das Druckmotiv auf eine Papierbahn zu drucken und damit ein Druckexemplar oder Probeexemplare herzustellen. Von diesem wird nun an wenigstens einer Stelle der bedruckten Oberfläche ein Ist-Tonwert der Farbe bestimmt und mit dem bereitgestellten Soll-Tonwert für die entsprechende Farbe an der jeweiligen Stelle verglichen. Auf der Basis dieses Vergleiches wird der Tonwert in den digitalen Informationen der Druckvorlage korrigiert. Anschließend kann mit den so korrigierten Informationen der Druckvorlage ein weiteres Probeexemplar gedruckt werden oder die Produktion beginnen.

Ein Vorteil des erfindungsgemäßen Verfahrens liegt darin, dass ein direkter Produktionsparameter, für den Vergleich mit einem entsprechenden Soll-Wert herangezogen wird. Dies ist im Stand der Technik nicht der Fall. Durch die erfindungsgemäße Vorgehensweise ist es möglich eine direkte Korrekturmaßnahme zu ermitteln, unabhängig davon, wodurch die Abweichung des Ist-Tonwertes vom Soll-Tonwert hervorgerufen wurde.

Die Soll-Tonwerte werden vorzugsweise von einer gedruckten Vorlage ausgehend ermittelt. Es wird dann eine gedruckte Vorlage erstellt, die das gewünschte Druckmotiv zeigt und dabei allen Qualitätsansprüchen genügt. Von dieser gedruckten Vorlage werden dann Tonwerte erfasst. Dies geschieht vorzugsweise, aber nicht notwendigerweise, hyperspektral. Die so erfassten Tonwerte werden dann als Urmuster bezeichnet und gespeichert. Soll dann eine Papierbahn mit dem Druckmotiv der gedruckten Vorlage bedruckt werden, wird wenigstens ein Tonwert aus dem Urmuster als Soll-Tonwert bereitgestellt und bei dem erfindungsgemäßen Verfahren verwendet. Auf die gedruckte Vorlage muss nicht mehr zurückgegriffen werden.

Vorzugsweise wird als Soll-Tonwert ein Tonwert bereitgestellt, der aus den digitalen Informationen der digitalen Druckvorlage ausgelesen oder ermittelt wird.

Vorzugsweise werden Soll-Tonwerte unterschiedlicher Farben bereitgestellt und die Ist-Tonwerte mehrerer dieser Farben, vorzugsweise aller dieser Farben werden bestimmt. Dadurch wird nicht nur die Qualität des Druckes einer einzigen Farbe und/oder nur eines einzigen Farbwertes einer oder mehrerer Farben bestimmt. Es wird sichergestellt, dass mehrere Tonwerte einer oder mehrerer Farben oder ein Tonwert mehrerer Farben geprüft und mit dem entsprechenden Soll-Tonwert, der bereitgestellt wurde, verglichen werden.

Bevorzugt wird der Ist-Tonwert einer Farbe ermittelt, indem Tonwerte der Farbe an verschiedenen Stellen der bedruckten Oberfläche gemessen werden, die den gleichen Soll-Tonwert für diese Farbe aufweisen. Vorzugsweise wird dann über diese so bestimmten Tonwerte der Farbe gemittelt, um den Ist-Tonwert der Farbe zu ermitteln. Sollten an unterschiedlichen Stellen der bedruckten Oberfläche verschiedene Abweichungen der jeweiligen Tonwerte vom Soll-Tonwert auftreten, würden diese durch die Bildung des Mittelwertes weniger stark ins Gewicht fallen.

Beim Korrigieren des Tonwertes wird dieser in den digitalen Informationen der Druckvorlage vorzugsweise für das gesamte Druckmotiv identisch korrigiert. Ein Tonwert einer bestimmten Farbe kann an unterschiedlichen Stellen des Druckmotivs benötigt werden. Prinzipiell ist es möglich, an jede dieser Stellen in dem Probeexemplar den Ist-Tonwert zu bestimmen, mit dem Soll-Tonwert zu vergleichen und den Tonwert an jeder Stelle individuell je nach bestimmter Abweichung zu korrigieren. Um diese flächendeckend korrigieren zu können, müsste jedoch an jeder Stelle des Probeexemplares, beispielsweise jedem Pixel des Druckmotivs die Abweichung zwischen Ist-Tonwert und Soll-Tonwert ermittelt werden. Dies ist zeitaufwendig und in der Regel nicht praktikabel.

Es ist daher von Vorteil, den Tonwert in den digitalen Informationen der Druckvorlage für eine bestimmte Farbe für das gesamte Druckmotiv einheitlich zu korrigieren. Die Grundlage für diese Korrektur kann der Vergleich eines einzelnen bestimmten Ist-Tonwertes mit dem jeweiligen Soll-Tonwert sein. Eine bessere Basis ist jedoch gegeben, wenn der mit dem Soll-Tonwert zu vergleichende Ist-Tonwert durch die Mittelung über eine Mehrzahl, beispielsweise wenigstens 5, bevorzugt wenigstens 10, besonders bevorzugt wenigstens 20 einzeln bestimmte Tonwerte der jeweiligen Farbe ermittelt wird.

In einer bevorzugten Ausgestaltung wird beim Vergleichen des Ist-Tonwertes mit dem Soll-Tonwert eine Differenz zwischen dem Ist-Tonwert und dem Soll-Tonwert ermittelt. Diese Differenz wird als Grundlage für die Korrektur des Tonwertes in den digitalen Informationen verwendet. In einer besonders bevorzugten Ausgestaltung wird der Tonwert korrigiert, in dem von dem Tonwert die Differenz subtrahiert wird. Ist beispielsweise der Ist-Tonwert 10 Prozentpunkte größer als der Soll-Tonwert, beträgt die Differenz folglich 10. Diese werden in dieser besonders bevorzugten Ausgestaltung von dem Tonwert subtrahiert, sodass dieser um diesen Wert verkleinert wird. Beim nächsten Druck wird der zum Steuern der Digitaldruckanlage verwendete Tonwert folglich kleiner angegeben, sodass das Druckergebnis eher dem ursprünglich vorgesehenen Druckmotiv, also dem Soll-Tonwert, entspricht.

Vorzugsweise werden mehrere Ist-Tonwerte einer Farbe bestimmt und in einer Wertetabelle und/oder einer Gradationskurve ausgegeben. Dabei werden die Ist-Tonwerte mit den entsprechenden Soll-Tonwerte in Beziehung gesetzt. Bei einem perfekten Druck, bei dem keine Differenz zwischen dem Soll-Tonwert und dem Ist-Tonwert auftritt, ergibt sich als Gradationskurve eine gerade mit Steigung 1.

Vorzugsweise wird zum Bestimmen eines Ist-Tonwertes jeweilige Stelle der bedruckten Oberfläche mit einem Scanner, einem Bild-Abtaster, einer Kamera und/oder einem Lichtsensor erfasst, vorzugsweise hyperspektral erfasst. Vorzugsweise wird der Ist-Tonwert der Farbe an unterschiedlichen Stellen der bedruckten Oberfläche bestimmt und mit dem jeweiligen Soll-Tonwert verglichen.

In einer bevorzugten Ausgestaltung wird die Papierbahn nach dem Bedrucken der Oberfläche imprägniert und mit einem Kern, vorzugsweise aus einem Holzwerkstoff, verpresst, bevor der wenigstens eine Ist-Tonwert bestimmt wird.

## Patentansprüche

1. Verfahren zum Bedrucken einer Papierbahn mit einem Druckmotiv mittels einer Digitaldruckanlage, wobei das Verfahren folgende Schritte aufweist:
- Bereitstellen einer digitalen Druckvorlage, in der digitale Informationen über das Druckmotiv enthalten sind und und die Soll-Tonwerte einer Farbe des Druckmotivs enthalten, und eines Soll-Tonwertes eines Urmusters des Druckmotivs
- Herstellen eines Druckexemplars durch Bedrucken einer Oberfläche der Papierbahn mittels der Digitaldruckanlage auf der Grundlage der Druckvorlage,
- Bestimmen wenigstens eines Ist-Tonwertes der Farbe an wenigstens einer Stelle der bedruckten Oberfläche,
- Vergleichen des bestimmten Ist-Tonwertes mit dem Soll-Tonwert des Urmusters
- Korrigieren des Soll-Tonwertes in den digitalen Informationen der Druckvorlage auf der Grundlage des Ergebnisses des Vergleiches.
- Herstellen eines weiteren Druckexemplars durch Bedrucken einer Oberfläche der Papierbahn mittels der Digitaldruckanlage auf der Grundlage der korrigierten Informationen der Druckvorlage.

2. Verfahren nach Anspruch 1, **dadurch gekennzeichnet, dass** Soll-Tonwerte unterschiedlicher Farben bereitgestellt werden und die Ist-Tonwerte mehrerer dieser Farben, vorzugsweise aller dieser Farben bestimmt werden.

3. Verfahren nach Anspruch 1 oder 2, **dadurch gekennzeichnet, dass** der Ist - Tonwert einer Farbe ermittelt wird, indem Tonwerte der Farbe an verschiedenen Stellen der bedruckten Oberfläche gemessen werden, die den gleichen Soll-Tonwert für diese Farbe aufweisen, und dann über die gemessenen Tonwerte gemittelt wird.

4. Verfahren nach einem der vorstehenden Ansprüche, **dadurch gekennzeichnet, dass** beim Vergleichen des Ist-Tonwertes mit dem Soll-Tonwert eine Differenz zwischen dem Ist-Tonwert und dem Soll-Tonwert ermittelt wird.

5. Verfahren nach Anspruch 4, **dadurch gekennzeichnet, dass** der Tonwert korrigiert wird, indem von dem Tonwert die Differenz subtrahiert wird.

6. Verfahren nach einem der vorstehenden Ansprüche, **dadurch gekennzeichnet, dass** mehrere Ist-Tonwerte einer Farbe bestimmt und in Form einer Wertetabelle und/oder einer Gradationskurve ausgegeben werden.

7. Verfahren nach einem der vorstehenden Ansprüche, **dadurch gekennzeichnet, dass** zum Bestimmen eines Ist-Tonwertes die jeweilige Stelle der bedruckten Oberfläche mit einem Scanner, einem Bildabtaster, einer Kamera und/oder einem Lichtsensor erfasst, vorzugsweise hyperspektral erfasst wird.

8. Verfahren nach einem der vorstehenden Ansprüche, **dadurch gekennzeichnet, dass** der Ist-Tonwert der Farbe an unterschiedlichen Stellen der bedruckten Oberfläche bestimmt und mit dem Soll-Tonwert verglichen wird.

9. Verfahren nach einem der vorstehenden Ansprüche, **dadurch gekennzeichnet, dass** die Papierbahn nach dem Bedrucken der Oberfläche imprägniert und mit einem Kern, vorzugsweise aus einem Holzwerkstoff, verpresst wird, bevor der wenigstens eine Ist-Tonwert bestimmt wird.

## Claims

1. A method for printing a paper web with a print motif by means of a digital printing facility, wherein the method comprises the following steps:
- providing a digital print template, which contains digital information on the print motif, and a target tone value of a color of the print motif, and a target tone value of a master sample of the print motif,
- producing a print copy by printing onto a surface of the paper web by means of the digital printing facility on the basis of the print template,
- determining at least one actual tone value of the color at at least one point of the printed surface,
- comparing the determined actual tone value with the target tone value of the master sample,
- correcting the target tone value in the digital information of the print template on the basis of the results of the comparison,
- producing a further print copy by printing onto a surface of the paper web by means of the digital printing facility on the basis of the corrected information of the print template.

2. The method according to claim 1, **characterized in that** target tone values of different colors are provided and the actual tone values of several of these colors, preferably all of these colors, are determined.

3. The method according to claim 1 or 2, **characterized in that** the actual tone value of a color is determined by measuring tone values of the color at different points of the printed surface which have the same target tone value for this color, and then averaging the measured tone values.

4. The method according to one of the preceding claims, **characterized in that** a difference between the actual tone value and the target tone value is determined when comparing the actual tone value and the target tone value.

5. The method according to claim 4, **characterized in that** the tone value is corrected by subtracting the difference from the tone value.

6. The method according to one of the preceding claims, **characterized in that** multiple actual tone values of a color are determined and output in the form of a value table and/or a gradation curve.

7. The method according to one of the preceding claims, **characterized in that** the respective point of the printed surface is captured, preferably hyperspectrally captured, with a scanner, an image scanner, a camera and/or a light sensor in order to determine an actual tone value.

8. The method according to one of the preceding claims, **characterized in that** the actual tone value of the color is determined at various points of the printed surface and compared with the target tone value.

9. The method according to one of the preceding claims, **characterized in that** the paper web is impregnated after printing on the surface and pressed with a core, preferably made of a wood-based material, before the at least one actual tone value is determined.

## Revendications

1. Procédé d'impression d'un motif à imprimer sur une bande de papier au moyen d'une installation d'impression numérique, le procédé comprenant les étapes suivantes consistant à :
- fournir un modèle d'impression numérique contenant des informations numériques sur le motif à imprimer et sur des valeurs de teinte de consigne d'une couleur du motif à imprimer, et fournir une valeur de teinte de consigne d'un modèle original du motif à imprimer,
- réaliser un exemplaire imprimé par impression d'une surface de la bande de papier au moyen de l'installation d'impression numérique sur la base du modèle d'impression,
- définir au moins une valeur de teinte réelle de la couleur à au moins un endroit de la surface imprimée,
- comparer la valeur de teinte réelle définie avec la valeur de teinte de consigne du modèle original,
- corriger la valeur de teinte de consigne dans les informations numériques du modèle d'impression sur la base du résultat de la comparaison,
- réaliser un autre exemplaire imprimé par impression d'une surface de la bande de papier au moyen de l'installation d'impression numérique sur la base des informations corrigées du modèle d'impression.

2. Procédé selon la revendication 1,
**caractérisé en ce que** des valeurs de teinte de consigne de différentes couleurs sont fournies, et les valeurs de teinte réelles de plusieurs de ces couleurs, de préférence de toutes ces couleurs, sont définies.

3. Procédé selon la revendication 1 ou 2,
**caractérisé en ce que** la valeur de teinte réelle d'une couleur est déterminée en mesurant les valeurs de teinte de la couleur à différents endroits de la surface imprimée qui présentent la même valeur de teinte de consigne pour cette couleur, puis en calculant la moyenne des valeurs de teinte mesurées.

4. Procédé selon l'une des revendications précédentes,
**caractérisé en ce que**, lors de la comparaison de la valeur de teinte réelle avec la valeur de teinte de consigne, une différence entre la valeur de teinte réelle et la valeur de teinte de consigne est déterminée.

5. Procédé selon la revendication 4,
**caractérisé en ce que** la valeur de teinte est corrigée en soustrayant la différence de la valeur de teinte.

6. Procédé selon l'une des revendications précédentes,
**caractérisé en ce que** plusieurs valeurs de teinte réelles d'une couleur sont définies et éditées sous la forme d'un tableau de valeurs et/ou d'une courbe de gradation.

7. Procédé selon l'une des revendications précédentes,
**caractérisé en ce que**, pour définir une valeur de teinte réelle, l'endroit respectif de la surface imprimée est enregistré, de préférence de manière hyper-spectrale, à l'aide d'un scanner, d'un analyseur d'images, d'une caméra et/ou d'un capteur de lumière.

8. Procédé selon l'une des revendications précédentes,
**caractérisé en ce que** la valeur de teinte réelle de la couleur est définie à différents endroits de la surface imprimée et est comparée à la valeur de teinte de consigne.

9. Procédé selon l'une des revendications précédentes,
**caractérisé en ce que** la bande de papier est imprégnée après l'impression de la surface et est pressée avec un noyau, de préférence en matériau dérivé du bois, avant que ladite au moins une valeur de teinte réelle soit définie.
